# EUROPÄISCHE PATENTANMELDUNG

(11) **EP 2 871 378 A2**
(43) Veröffentlichungstag der Anmeldung: **13.05.2015**
(21) Anmeldenummer: 14190086.0
(22) Anmeldetag: 23.10.2014
(51) Int. Cl.: F16C 33/38, F16C 33/44, F16C 33/46, F16C 33/56

(54) **Käfig oder Käfigsegment mit Verstrebung für ein Wälzlager sowie Verfahren zu Herstellung des Käfigs oder Käfigsegments**

(30) Priorität: 25.10.2013 DE 102013221682
(71) Anmelder: Aktiebolaget SKF, 41 550 Göteborg (SE)
(72) Erfinder: Krause, Thomas, 97506 Grafenrheinfeld (DE)
(74) Vertreter: Kuhstrebe, Jochen

(57) **Zusammenfassung**

Die Erfindung betrifft einen Käfig (1) oder ein Käfigsegment (3) für ein Wälzlager. Der Käfig (3) oder das Käfigsegment (3) umfasst zumindest eine Verstrebung (9) mit zumindest einer vorimprägnierten Faser.

## Beschreibung

Ausführungsbeispiele betreffen einen Käfig oder ein Käfigsegment für ein Wälzlager sowie ein Verfahren zum Herstellen eines Käfigs oder eines Käfigsegments für ein Wälzlager nach den unabhängigen Ansprüchen.

Wälzlagerkäfige die aus einem thermoplastischen Kunststoff, beispielsweise in einem Spritzgussverfahren hergestellt sind, können herstellungsbedingt an bestimmten Positionen Schwachstellen aufweisen. Bei manchen Belastungen kann es passieren, dass die Wälzlagerkäfige an diesen Schwachstellen brechen. Eine Schwachstelle können beispielsweise sogenannte Bindenähte darstellen. Die Bindenähte können beispielsweise durch das Zusammenfließen mehrerer Schmelzfronten in einer Kavität eines Spritzgießwerkzeuges entstehen. In manchen Fällen können die Bindenähte bei einem Umfließen der mittels Werkzeugschiebern ausgebildeten Käfigtaschen entstehen. Da die Molekülketten des Kunststoffs in einem Bereich, in dem die Schmelzfronten zusammentreffen, ggf. keine genügende Verhakung und/oder Verschlaufung ausbilden können, kann das Material des Käfigs in dem Bereich einer Bindenaht im Vergleich zu dem Kunststoffmaterial an anderen Käfigpositionen, ggf. eine geringere Zugfestigkeit aufweisen.

Diese geringe Bindenahtfestigkeit kann beispielsweise durch das Vorhandensein von kurzen Verstärkungsfasern (0 mm - 1 mm) im Vergleich (prozentual) zu einer Festigkeit des Werkstoffs in anderen Käfigbereichen (übriges Käfigmaterial) sogar noch weiter reduziert sein. Dies kann beispielsweise deshalb passieren, weil sich die Verstärkungsfasern ggf. in dem Bereich der Bindenähte senkrecht zu einer späteren möglichen Beanspruchungsrichtung ausrichten können.

Eine weitere Schwachstelle innerhalb des Kunststoffkäfigs kann beispielsweise der Übergang zwischen einem Steg (Käfigsteg) bzw. den Stegen und einem Führungsbord (z.B. Käfigbord) darstellen. Beispielsweise verursacht durch scharfe Kanten, enge Radien und/oder eine ungünstige Orientierung der kurzen Verstärkungsfasern, können bei Lastübertragung der Wälzkörper (z.B. Rollen oder Kugeln) auf den Käfig in diesen Bereichen Spannungsspitzen auftreten, welche ggf. an diesen Stellen zu einem Bruch des Käfigs führen können.

Um die genannten Probleme zu reduzieren oder zu beheben, wird bei konventionellen Lösungen versucht, sogenannte "Überläufe" in den Bereich der Bindenähte einzubringen. Es wird beispielsweise versucht, die Bindenähte teilweise in einen Bereich der Überläufe zu verschieben. Dadurch kann beispielsweise eine Bindenahtfestigkeit verbessert werden. Es kann meist jedoch trotzdem nicht die Festigkeit des Spritzgussmaterials (Käfigmaterials) außerhalbe der Bindenähte erreicht werden. Mit anderen Worten ausgedrückt, kann die Bindenahtfestigkeit verbessert werden, erreicht aber nicht 100 % des Käfigmaterials bzw. dessen Festigkeit.

Des Weiteren wird bei konventionellen Lösungen versucht, eine Anschnittpositionierung zu verändern, um die Bindenähte zu verzerren. Dies könnte jedoch in manchen Fällen zu einer ungleichmäßigen Füllung führen, wodurch sich beispielsweise ein Käfigverzug ergeben kann.

Es besteht daher ein Bedarf daran, einen Käfig oder ein Käfigsegment zu verbessern, sowie ein Verfahren zur Herstellung des Käfigs oder des Käfigsegments bereitzustellen.

Diesem Bedarf trägt ein Käfig oder ein Käfigsegment sowie ein Verfahren zum Herstellen eines Käfig oder eines Wälzlagerkäfigsegment nach den Merkmalen der unabhängigen Ansprüche Rechnung.

Ausführungsbeispiele betreffen einen Käfig oder Käfigsegment für ein Wälzlager, wobei der Käfig oder das Käfigsegment zumindest eine Verstrebung mit zumindest einer vorimprägnierten Faser umfasst.

Dadurch, dass der Käfig oder das Käfigsegment einen Werkstoff aufweist, der zumindest eine Verstrebung mit zumindest einer vorimprägnierten Faser umfasst könnte beispielsweise bewirkt werden, dass die Festigkeit des Käfigs erhöht wird. Ferner könnte dadurch auch unter Umständen die Schlagzähigkeit des Käfigmaterials erhöht werden. Weiter könnte beispielsweise bei einem Wälzlager mit dem Käfig oder dem Käfigsegment nach dem Ausführungsbeispiel eine höhere Lagerdrehzahl erreicht werden als beispielsweise bei einem vergleichbaren Wälzlager mit einem Käfige oder einem Käfigsegment nach einem konventionellen Ausführungsbeispiel. Unter Umständen könnte bei einem Wälzlager mit dem Käfig oder Käfigsegment nach dem Ausführungsbeispiel eine Erhöhung von statischen und dynamischen Lagerlasten bzw. eine Erhöhung der Aufnahmefähigkeit von statischen und/oder dynamischen Lagerlasten bewirkt werden. Ferner könnte ggf. die Betriebsfestigkeit des Käfigs oder des Käfigsegments und damit auch eines Wälzlagers, das den Käfig oder das Käfigsegment umfasst, erhöht werden. Unter Umständen könnte dadurch sogar eine Steigerung der Lagerlebensdauer des Lagers, das den Käfig oder das Käfigsegment umfasst, bewirkt werden.

Ferner könnten dadurch, dass der Käfig oder das Käfigsegment eine erhöhte Festigkeit aufweisen kann, beispielsweise ein Käfig oder ein Käfigsegment, das im Wesentlichen einen Kunststoff und die zumindest eine Faser oder Fasern umfasst bzw. die Verstrebung mit der zumindest einen Faser, anstelle von einem Messing- oder Stahlblechkäfig eingesetzt werden (Substitution von Messing- und Stahlblechkäfigen). Dadurch könnte beispielsweise gegenüber dem Messing- oder Stahlblechkäfig eine Gewichtseinsparung bei dem Käfig oder Käfigsegment und dadurch ggf. auch für das gesamte Wälzlager ermöglicht werden. Ferner könnte der Käfig oder das Käfigsegment beispielsweise auf eine einfachere Art und Weise und ggf. mit einem geringeren Materialaufwand und/oder geringeren Herstellungskosten gegenüber einem Messing- oder Stahlblechkäfig bereitgestellt werden. Dadurch könnten ggf. die Herstellung des Käfigs oder des Käfigsegments vereinfacht werden.

Eine Faser kann beispielsweise jedwedes Bauteil sein, das ausgebildet ist, um die beschriebene Festigkeit zu bewirken. Beispielsweise kann die Faser dazu in ihre Länge eine wesentlich größere Ausdehnung als in ihre Breite aufweisen. Beispielsweise kann die Faser eine Länge aufweisen, die mindesten 10-mal größer, 15-mal größer oder 20-mal größer als ihr Durchmesser ist. Beispielsweise kann eine Faser im Verhältnis zu ihrer Länge ein dünnes und flexibles Gebilde sein. Beispielsweise können Fasern in Längsrichtung nur wenig oder sogar keinen Druck, sondern ggf. besser Zugkräfte aufnehmen. Beispielsweise kann die Faser eine Glasfaser, eine Kohlefaser, eine Metallfaser, eine Keramikfaser, eine Kunststofffaser, eine Naturfaser etc. sein. Die Faser kann ggf. jedwedes Querschnittsprofil aufweisen, beispielsweise kreisförmig, rechteckig, rund, profilförmig, C-Profil, T- Profil, H-Profil, U-Profil oder ein Hohlprofil sein. Beispielsweise kann die Faser eine Länge aufweisen, die länger als ein Viertel, ein Drittel, die Hälfte oder Länge der Käfigbreite ist. Beispielsweise kann die Faser im Gegensatz zu den bei manchen konventionellen Lösungen verwendeten Verstärkungsfasern (z.B. Kurzfasern, Schnipsel), die beispielsweise eine Länge von 0 mm bis 1 mm aufweisen, eine sogenannte Endlosfaser sein. Beispielsweise kann die Faser eine Länge aufweisen, die größer ist als 1 mm. Beispielsweise kann die Faser länger als 1,1 mm, 1,2 mm, 1,3 mm, 1,4 mm, 2 mm, 3 mm, 5 mm, 10, mm, 20 mm etc. sein.

Eine vorimprägnierte Faser kann beispielsweise jedwede Faser sein, die von einem Material umschlossen ist, bevor sie als Material oder Werkstoff für die Verstrebung dient. Beispielsweise kann die Faser in eine Matrix eingelagert sein, oder mit einem Harz, oder einem Kunststoff (z.B. Duroplast oder Thermoplast) vorimprägniert, getränkt und/oder überzogen sein, Dadurch könnte beispielsweise ermöglicht werden, dass die Faser eine höhere Stabilität erhält. Als Matrixmaterial kann beispielsweises jedwedes Material eingesetzt werden, das ausgebildet ist, um als Matrix zu dienen. Beispielsweise kann das Material Kunststoff, eine Harz, ein Thermoplast oder Duroplast sein. Mit anderen Worten ausgedrückt, kann die Faser mit einem Matrixmaterial bzw. einem Kunststoff oder einem Harz imprägniert sein. Mit anderen Worten ausgedrückt, kann als Werkstoff für den Käfig oder das Käfigsegment oder die Verstrebung eine imprägnierte Faser oder eine Faser, die in einer Matrix eingelagert ist, beispielsweise ein faserverstärkter Werkstoff, verwendet werden.

Bei einigen weiteren Ausführungsbeispielen umfasst die Verstrebung eine Mehrzahl von unidirektional angeordneten Fasern. Dadurch könnte ggf. bewirkt werden, dass die zumindest eine Faser eine systematische Ausrichtung aufweist. So könnte beispielsweise bewirkt werden, dass die Faser so angeordnet ist, dass sie angreifende Lasten gut aufnehmen kann oder die Faser so angeordnet ist, dass die Stellen eines Käfigs, die nach einem konventionellen Spritzgussverfahren eine geringere Festigkeit oder eine Schwachstelle aufweisen oder darstellen könnten, eine höhere Festigkeit verleihen kann bzw. verstärken. Dadurch, dass die Faser länger sein kann als eine Verstärkungsfaser oder Kurzfaser, die beispielsweise mit einem Kunststoffgranulat gemischt werden und dann gleichzeitig mit diesem aus einer Düse ausgebracht werden kann, könnte beispielsweise die systematische Ausrichtung der Faser erleichtert werden. Beispielsweise kann die zumindest eine Faser parallel zu dem Steg angeordnet sein. Beispielsweise kann die Faser um einen Winkel von 0° bis 45° geneigt, zu einer Kante des Stegs angeordnet sein. Ergänzend oder alternativ kann die zumindest eine Faser parallel zu einer Umfangsrichtung des Käfigbordes angeordnet sein. Ergänzend oder alternativ kann die zumindest eine Faser orthogonal zu einer Umfangsrichtung des Käfigsbords und/oder orthogonal zu einer Richtung der axialen Ausdehnung des Stegs angeordnet sein. Beispielsweise kann mit orthogonal ein Winkelbereich gemeint sein, der 10° bis 90° umfasst, beispielsweise 30° bis 70°, beispielsweise 45°. Beispielsweise kann die zumindest eine Faser in Richtung einer aufzunehmenden Kraft, beispielsweise einer Zugkraft, angeordnet sein.

Bei einigen weiteren Ausführungsbeispielen umfasst die Verstrebung eine Mehrzahl von Fasern. Dadurch könnte beispielsweise bewirkt werden, dass eine Festigkeit des Werkstoffs erhöht werden kann. Beispielsweise kann die Verstrebung unidirektionale Fasern umfassen oder unidirektional angeordnete Langfasern bzw. sogenannte UD-Tape sein. In manchen Fällen kann beispielsweise eine Mehrzahl von Fasern parallel zueinander angeordnet sein. Dadurch könnte unter Umständen ermöglicht werden, dass die Fasern in eine Vorzugsrichtung angeordnet sein können, beispielsweise so, dass sie eine angreifende Last besonders gut aufnehmen können. Mit anderen Worten ausgedrückt, kann der Wälzlagerkäfig als Werkstoff einen Kunststoff mit integrierten Bändern aus unidirektional angeordneten Langfasern (UD-Tapes) umfassen. Beispielsweise kann es sich dabei um ein faserverstärktes Halbzeug, beispielsweise ein sog. Prepreg oder ein Prepregband oder eine Mehrzahl von Prepregbändern handeln. Dadurch könnte beispielsweise die Käfigfestigkeit erhöht werden und eine Verstärkung kritischer Käfigbereiche, beispielsweise mit hoher Beanspruchung bzw. Spannungskonzentrationen, bewirkt werden. Unter Umständen könnte durch die Verstärkung mit Fasern (UD-Tapes) bewirkt werden, dass der Käfig höhere Lasten aufnehmen kann. Dadurch könnten beispielsweise Wälzlager mit höheren Drehzahlen und/oder höheren Lasten bzw. Lastaufnahmen bereitgestellt werden. Ferner könnte gegebenenfalls eine Substitution von Messing- und Stahlblechkäfigen durch diese faserverstärkten Kunststoffkäfige ermöglicht werden und so könnte ferner beispielsweise eine Gewichts- und Energieeinsparung sowie beispielsweise eine Reduzierung der Herstellungskosten ermöglicht werden. Mit anderen Worten ausgedrückt, kann beispielsweise ein Wälzlagerkäfig mit einer unidirektionalen Langfaserverstärkung bereitgestellt werden.

Eine Verstrebung kann beispielsweise jedwedes Bauteil sein, das ggf. die eine Festigkeit oder eine Stabilität eines Bauteils, beispielsweise des Käfigs erhöht. Beispielsweise kann die Verstrebung Zug- und/oder Druckkräfte aufnehmen.

Bei einigen weiteren Ausführungen kann die Verstrebung eine textile Gewebefaserschicht umfassen, bzw. kann die zumindest eine Faser als eine Gewebefaserschicht angeordnet sein. Beispielsweise kann eine Mehrzahl von parallel zueinander angeordneten Fasern, um einen Winkel verdreht, zu einer anderen Mehrzahl von parallel zueinander angeordneten Fasern angeordnet sein. Der Winkel kann beispielsweise in einem Wertebereich mit einem Anfangswert und einem Endwert liegen. Beispielsweise kann ein Anfangswert oder ein Endwert 0°, 5°, 10°, 15°, 20°, 25°, 30°, 40°, 45° 50°, 60°, 70°, 80° 85° oder 90° sein. Dadurch könnte beispielsweise bewirkt werden, dass der Werkstoff sehr stabil und unter Umständen besonders leicht ausgebildet sein kann.

Beispielsweise können die als eine textile Gewebefaserschicht angeordneten Fasern ein Faser-Matrix-Halbzeug sein. Halbzeuge können beispielsweise auf einfache Art und Weise umgeformt, beispielsweise warmumgeformt, werden. Beispielsweise könnte die Verstrebung als die vorimprägnierte Faser ein Organoblech umfassen. Dadurch könnte beispielsweise ein Wälzlagerkäfig mit einem Organoblech bereitgestellt werden. Unter Umständen kann die Gewebefaserschicht ein Fasergewebe oder ein Fasergelege aufweisen, das beispielsweise in eine thermoplastische Kunststoffmatrix eingebettet sein kann. Beispielsweise können Organobleche warm umgeformt werden. Dadurch könnte ggf. eine leichte Verarbeitung des Faserverbundwerkstoffs bzw. des Organoblechs ermöglicht werden. Mit anderen Worten ausgedrückt, könnte beispielsweise ein Wälzlagerkäfig aus einem Kunststoff mit einem integrierten Organoblech oder nur aus einem Organoblech, beispielsweise zur Erhöhung der Käfigfestigkeit und zur Verstärkung kritischer Käfigbereiche mit hohen Beanspruchungen bzw. Spannungskonzentrationen bereit gestellt werden. Durch die Verstärkung mit einem oder einer Mehrzahl von Organoblechen könnten ggf. ermöglicht werden, dass der Käfig oder das Käfigsegment höhere Lasten aufnehmen kann. Dadurch könnten beispielsweise ein Wälzlager das sich für höhere Drehzahlen und/oder zu Aufnahme höherer Lasten eignet, bereitgestellt werden.

Bei einigen weiteren Ausführungsbeispielen umfasst die Verstrebung bzw. kann die Faser bzw. die Mehrzahl von Fasern ein sogenanntes PEEK UD Carbon Tape (von: Polyetheretherketon Unidirektional, Karbon Band) sein. Dieses kann beispielsweise eine Dichte von 1,6 g/cm³ und/oder eine Zugfestigkeit von 2000 MPa und/oder einen E-Modul von 135 GPa aufweisen. Damit könnten beispielsweise ein Käfig oder ein Käfigsegment bereitgestellt werden, der oder das gegenüber einem Käfig oder Käfigsegment, der oder das aus Messing hergestellt ist, ein deutlich geringeres Gewicht und eine höhere Zugfestigkeit und eine höhere Elastizität aufweist. Messing könnte beispielsweise eine Dichte von 8,5 g/cm³ und/oder eine Zugfestigkeit von 400 MPa und/oder einen E-Modul von 86 GPa aufweisen.

Bei einigen weiteren Ausführungsbeispielen ist eine Mehrzahl von Verstrebungen in einem Muster angeordnet. Dadurch könnte beispielsweise eine systematische Verstärkung des Käfigs, ggf. in einem Bereich von Schwachstellen erreicht werden. Ggf. können die folgenden Ausführungsbeispiele ein Beispiel für solch ein Muster darstellen.

Bei einigen weiteren Ausführungsbeispielen ist die zumindest eine Verstrebung zumindest abschnittweise parallel zu einer axialen Richtung des Käfigs oder Käfigsegments angeordnet. Dadurch könnte möglicherweise bewirkt werden, dass der Käfig oder das Käfigsegment in eine axiale Richtung verstärkt sein kann. Dabei kann eine axiale Richtung ggf. parallel zu einer Drehachse des Käfigs in einer Betriebssituation sein. Ggf. kann eine axiale Richtung auch eine Richtung sein, die vertikal zu einer radialen Richtung und einer Umfangsrichtung angeordnet ist. Beispielsweise können parallel angeordnet Bauteile auch in einem Winkel zueinander angeordnet sein. Der Winkel kann ggf. in einem Winkelbereich liegen der einen Anfangswert und einen Endwert aufweist. Beispielsweise kann der Anfangswert oder der Endwert 0°, 1°, 2°, 3° 4°, 5°, 10° oder 25° betragen.

Bei einigen weiteren Ausführungsbeispielen ist die zumindest eine Verstrebung parallel zu einer Umfangsrichtung des Käfigs angeordnet. Dadurch könnte ggf. bewirkt werden, dass der Käfig oder das Käfigsegment in eine Umfangsrichtung verstärkt werden kann.

Bei einigen weiteren Ausführungsbeispielen ist die zumindest eine Verstrebung zumindest abschnittweise in einem Bereich des Stegs zumindest abschnittsweise parallel zu dem Steg angeordnet. Dadurch könnte ggf. bewirkt werden, dass der Steg verstärkt wird. Ein Steg kann dabei beispielsweise jedwedes Bauteil sein, das beispielsweise einen ersten in Umfangsrichtung angeordneten Ring und einen zweiten in eine Umfangsrichtung angeordneten Ring, beispielsweise die Käfigborde, miteinander verbindet. Beispielsweise kann der Steg parallel zu einer Drehachse des Wälzlagers angeordnet sein. Eine Stegbreite kann dabei eine Ausdehnung des Stegs in eine Umfangsrichtung des Käfigs sein.

Bei einigen weiteren Ausführungsbeispielen ist die zumindest eine Verstrebung in einem Bereich des Stegs zumindest abschnittsweise vertikal zu dem Steg angeordnet. Dadurch könnte ggf. bewirk werden, dass eine Bindenaht die sich in einem Bereich des Stegs ergibt, verstärkt werden kann.

Bei einigen weiteren Ausführungsbeispielen ist die zumindest eine Verstrebung in einem Bereich eines Käfigbords zumindest abschnittsweise in eine Umfangsrichtung angeordnet. So könnte unter Umständen bewirkt werden, dass der Bereich des Käfigbords verstärkt wird.

Bei einigen weiteren Ausführungsbeispielen ist die zumindest eine Verstrebung in einem Bereich eines Käfigbords zumindest abschnittsweise vertikal zu einer Umfangsrichtung angeordnet. Dadurch könnte ggf. bewirkt werden, dass Bindenähte die sich in dem Bereich des Käfigbords ergeben, verstärkt werden können.

Bei einigen weiteren Ausführungsbeispielen ist die zumindest eine Verstrebung aus einer Gewebefaserschicht (z.B. Organoblech) ausgeschnitten. Dadurch könnte ggf. bewirkt werden, dass eine Verstrebung mit einer komplexen Geometrie auf einfache Art und Weise hergestellt werden kann. Beispielsweise kann die Verstrebung die Form einer Leiter aufweisen. So könnte ggf. eine Verstrebung bereitgestellt werden, die die Stege und die Käfigborde verstärkt. Beispielsweise kann die Verstrebung so aus der Gewebefaserschicht ausgestanzt werden, dass Fasern parallel zu einer Kante der Faserschicht angeordnet sind. Dadurch könnte ggf. ermöglicht werden, dass Fasern parallel zu angreifenden Kräften angeordnet sind. Ergänzend oder alternativ kann die Verstrebung auch so aus der Gewebefaserschicht ausgeschnitten werden, dass die zumindest eine Faser in einem Winkel zu einer Kante der Verstrebung angeordnet ist. Beispielsweise kann der Winkel in einem Winkelbereich liegen der einen Anfangswert und einen Endwert aufweist. Beispielsweise kann der Anfangswert oder der Endwert sein: 0°, 5°, 10°, 15°, 20°, 25°, 30°, 35°, 40°, 45°. Beispielsweise könnte dadurch evtl. eine vorteilhafte Anordnung der zumindest einen Faser in dem Käfig oder Käfigsegment erreicht werden.

Bei einigen weiteren Ausführungsbeispielen ist die zumindest eine, Verstrebung, zumindest abschnittsweise mit einem Kunststoff umspritzt. Dadurch könnte beispielsweise ermöglicht werden, dass der Käfig oder das Käfigsegment eine Kunststoffoberfläche aufweisen und damit dieselben Oberflächeneigenschaften wie z.B. konventionelle Wälzlagerkäfige aus einem Kunststoff aufweisen. Diese Eigenschaften könnten beispielsweise eine Beständigkeit gegen Schmiermittel, Verschleiß oder dgl. sein. Beispielsweise kann als Kunststoff ein Kunststoff eingesetzt werden, der identisch zu dem Material der Matrix ist bzw. dem mit dem die Faser vorimprägniert ist oder sich chemisch mit diesem verträgt. Dadurch könnte beispielsweise eine gute Haltbarkeit oder Festigkeit des Käfigs oder Käfigsegments erreicht werden. Beispielsweise könnte ein thermoplastischer oder duroplastischer oder elastomerer Kunststoff eingesetzt werden. Mit anderen Worten ausgedrückt, kann als Matrixmaterial ein Kunststoff verwendet werden, der der gleiche Kunststoff ist, den der Käfig auch als Werkstoff umfasst oder ein Kunststoff, der sich mit dem Kunststoff des Wälzlagerkäfigs verträgt. Beispielsweise könnte die in die Matrix eingelagerte Faser als Stabilisator, Skelett, Verstärkungsstruktur, Verstrebung oder Gerüst für den Käfig oder das Käfigsegment dienen.

Ergänzend oder alternativ kann der Käfig oder das Käfigsegment zumindest abschnittsweise eine Oberfläche aufweisen, die von der Verstrebung oder der vorimprägnierten Faser bzw. der in die Matrix eingelagerte Faser gebildet wird. Dadurch könnte beispielsweise eine leichtere Herstellbarkeit des Käfigs oder des Käfigsegments bewirkt werden, da dieser gegebenenfalls nur teilweise mit Kunststoff umspritzt wird.

Bei einigen weiteren Ausführungsbeispielen kann der Käfig oder das Käfigsegment vollständig aus der Verstrebung bzw. der vorimprägnierten Faser oder einem faserverstärkten Werkstoff hergestellt sein. Dazu kann die Verstrebung beispielsweise mittels eines Presswerkzeugs zu dem Käfig oder dem Käfigsegment geformt werden. Ferner könnte beispielsweise die Verstrebung auch zu einem Rohr gewickelt sein, aus dem dann der Käfig oder das Käfigsegment ausgestanzt ist.

Bei einigen weiteren Ausführungsbeispielen umfasst der Käfig oder das Käfigsegment eine Mehrzahl von Verstrebungen, die in radialer Richtung übereinander angeordnet sind. Beispielsweise könnten diese als eine Mehrzahl von Stabilisatoren, beispielsweise in Form eines Skeletts dienen. Beispielsweise können die Verstrebungen oder die Fasern der Verstrebungen so zueinander angeordnet sein, dass sie bzw. ihre Fasern eine gemeinsame Ausrichtung aufweisen. Dadurch könnte beispielsweise die Aufnahmefähigkeit der angreifenden Kräfte aus einer Vorzugsrichtung erhöht werden. Alternativ können einzelne Verstrebungen auch unterschiedlich zueinander ausgerichtet sein bzw. Fasern aufweisen, die eine andere Ausrichtung aufweisen als die in einer anderen Verstrebung angeordneten Fasern. Dadurch könnte beispielsweise die Aufnahme von Kräften aus unterschiedlichen Richtungen verbessert werden.

Bei einigen weiteren Ausführungsbeispielen ist zwischen zwei Verstrebungen ein Abstandshalter angeordnet. Unter Umständen könnte so beispielsweise bewirkt werden, dass die Verstrebungen, die Gewebefaserschichten oder die Faserbündel, wenn sie beispielsweise in ein Spritzgießwerkzeug eingelegt werden, einen vordefinierten Abstand zueinander aufweisen und ggf. behalten können. Dadurch könnte beispielsweise eine verbesserte Festigkeit des Käfigs oder des Käfigsegments bewirkt werden.

Ausführungsbeispiele betreffen ein Verfahren zum Herstellen eines Käfigs oder eines Käfigsegments für ein Wälzlager. Das Verfahren umfasst zumindest ein Bereitstellen zumindest einer Verstrebung mit einer vorimprägnierten Faser. Ferner umfasst das Verfahren auch ein zumindest abschnittsweises Formen des Käfigs oder des Käfigsegments aus der zumindest einen Verstrebung.

Dabei kann das Bereitstellen der zumindest einen Verstrebung ggf. ein Zuschneiden der vorimprägnierten Faser, eines Faserbündel oder einer vorimprägnierten Gewebefaserschicht, eines UD-Tapes oder eines Organoblechs sein, bevor diese oder dieses an einer Schwachstelle des Käfigs oder der Käfersegmentgeometrie, beispielsweise im Bereich einer Bindenaht in ein Spritzgusswerkzeug eingelegt oder angeordnet wird. Ferner kann das Bereitstellen der Verstrebung auch stattfinden, wenn aus einem Faserverbundwerkstoff, einer Fasermatte oder einer Gewebefaserschicht eine Geometrie ausgestanzt wird, die dann, beispielsweise in einem Presswerkzeug, zu einem Käfig geformt wird. Ergänzend oder alternativ könnte die Verstrebung auch bereitgestellt werden, wenn die Faser oder eine Gewebefaserschicht abgeschnitten wird, um zu einem Rohr aufgewickelt zu werden.

Bei einigen weiteren Ausführungsbeispielen wird die zumindest eine Verstrebung zumindest abschnittsweise mit einem Kunststoff umspritzt, bedeckt oder beschichtet. Dadurch könnte beispielsweise erreicht werden, dass der Käfig oder das Käfigsegment an seiner Oberfläche zumindest abschnittsweise die Eigenschaften eines Käfigs aus Kunststoff aufweist.

Bei einigen weiteren Ausführungsbeispielen wird die Verstrebung beispielsweise zu einem Rohr gewickelt. Anschließend wird der Käfig oder das Käfigsegment aus dem Rohr ausgestanzt. Dadurch könnte beispielsweise ein einfaches Herstellungsverfahren für einen Käfig oder ein Käfigsegment bereitgestellt werden, bei dem auf ein Verschweißen von Enden unter Umständen verzichtet werden könnte. Es könnte ggf. ein sogenannter nahtfreier Wälzlagerkäfig hergestellt werden. Dadurch könnte beispielsweise die Festigkeit des Käfigs oder des Käfigsegments erhöht werden. Beispielsweise kann auch die Taschengeometrie aus dem Rohr ausgestanzt werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können ggf. auch Merkmale, die in manchen Ausführungsbeispielen als Verfahrensmerkmale implementiert sind, in anderen Ausführungsbeispielen als Vorrichtungsmerkmale implementiert sein.

Weitere vorteilhafte Ausgestaltungen werden nachfolgend anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt eine schematische Darstellung einer Seitenansicht eines Wälzlagerkäfigs nach einem Ausführungsbeispiel;
Fig. 2 zeigt eine schematische Darstellung von Vorderansichten unterschiedlicher Ausführungsbeispiele von Verstrebungen für einen Wälzlagerkäfig nach einem Ausführungsbeispiel;
Fig. 3 zeigt eine schematische Darstellung einer Draufsicht einer Verstrebung, für einen Käfig gemäß einem Ausführungsbeispiel;
Fig. 4 zeigt eine schematische Darstellung einer Seitenansicht eines Käfigs, der eine Mehrzahl von Verstrebungen gemäß Fig. 3 umfasst, nach einem Ausführungsbeispiel;
Fig. 5 zeigt eine schematische Darstellung eines Verfahrens zur Herstellung eines Käfigs oder eines Käfigsegments für ein Wälzlager nach einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

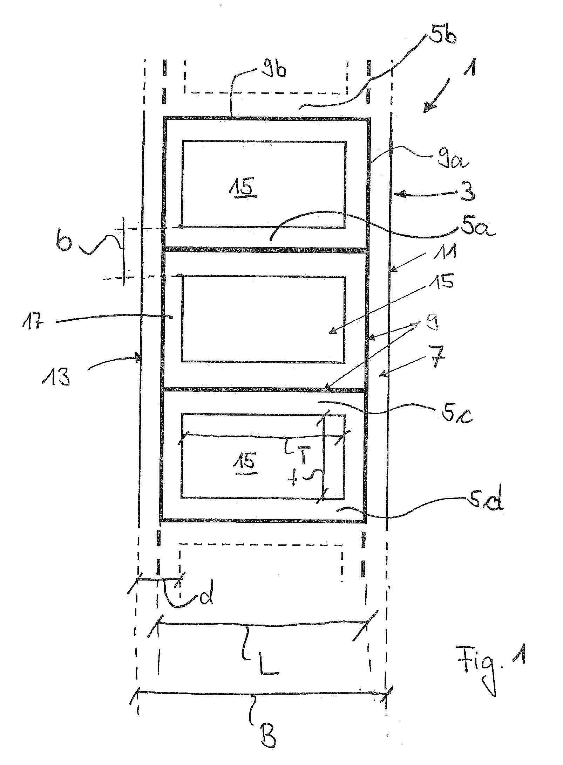

Fig. 1 zeigt eine schematische Darstellung einer Seitenansicht eines Wälzlagerkäfigs nach einem Ausführungsbeispiel.

Wie in Fig. 1 gezeigt, umfasst ein Käfig 1 oder ein Käfigsegment 3 für ein Wälzlager zumindest eine Verstrebung 9 mit zumindest einer vorimprägnierten Faser.

Optional kann der Käfig 1 einen ersten Käfigbord 11 und einen zweiten Käfigbord 13 aufweisen. Die Käfigborde 11 und 13 sind jeweils als sich in eine Umfangsrichtung erstreckende Ringe ausgebildet. Bei Fig. 1 ist durch die in den Endbereichen gestrichelte Darstellung angedeutet, dass der Käfig 1 hier in eine Umfangsrichtung eine Krümmung ausführt. Der Käfigbord 11 und der Käfigbord 13 sind jeweils über einen Steg 5a, 5b, 5c, 5d, und weitere, nicht dargestellte Stege verbunden. Jeweils zwischen zwei Stegen 5 und den Käfigborden 11 und 13 wird eine Tasche 15 ausgebildet. Jede der Taschen 15 kann beispielsweise zur Aufnahme eines nichtdargestellten Wälzkörpers dienen. Der Käfig 1 weist eine Breite B auf, die sich von einer äußeren Kante des Käfigbords 11 zu einer äußeren Kante des Käfigbords 13 erstreckt. Jede der Taschen 15 weist eine Taschenbreite T und eine Taschenhöhe t auf. Die Führungsborde 11 und 13 weisen jeweils eine Breite d auf. Bei dem Ausführungsbeispiel der Fig. 1 ist in jedem Steg 5 eine Verstrebung 9b angeordnet, die jeweils parallel zu den Stegen 5ausgerichtet ist. In den Käfigborden 11 und 13 ist jeweils eine Verstrebung 9a angeordnet, die parallel zu einer Umfangsrichtung des Käfigbords 11 bzw. 13 angeordnet ist. Dabei sind die Verstrebungen 9b in den Stegen 5 so lang ausgebildet, dass sie bis an die Verstrebungen 9a in den Käfigborden 11 und 13 ragen. Dabei können die Enden überlappen oder auch nicht überlappen. Mit anderen Worten ausgedrückt, sind einer Mehrzahl von Verstrebungen 9 in einem Muster angeordnet, das die Form einer Leiter aufweist.

Bei weiteren, nicht dargestellten Ausführungsbeispielen können die Verstrebungen 9 auch anders, als bei dem in der Fig. 1 dargestellten Ausführungsbeispiel angeordnet sein. Beispielsweise können die Verstrebungen nur in einem Bereich möglicher Schwachstellen angeordnet sein. Beispielsweise könnte eine Schwachstelle 17 an dem Führungsbord 13 im Wesentlichen mittig zwischen zu einer Tasche 15 bzw. zwischen dem Steg 5a und dem Steg 5c liegen. Diese Schwachstelle 17 könnte sich beispielsweise durch eine Bindenaht in diesem Bereich ergeben. Beispielsweise könnte an dieser Position eine nicht dargestellte Verstrebung positioniert werden. Diese könnte evtl. die Länge einer halben Taschenhöhe t aufweisen. Analog könnten weitere Schwachstellen auch an dem Führungsbord 11 oder zwischen den Stegen 5b und 5a oder den Stegen 5c und 5d vorliegen. Entsprechend können an diesen Stellen Verstrebungen angeordnet sein. Ferner können Verstrebungen ggf. eine abgewinkelte Form aufweisen, sodass beispielsweise ein Abschnitt der Verstrebung parallel zu dem Steg 5 ausgerichtet ist und ein anderer Abschnitt der Verstrebung parallel zu dem Käfigbord 11 oder 13 ausgerichtet ist.

Mit anderen Worten ausgedrückt, kann beispielsweise der Käfig 1 (z.B. Kunststoffkäfig) oder ein Käfigsegment 3 gezielt durch Prepregbänder als Verstrebung, mit unidirektional angeordneten Endlosfasern (UD-Tapes) verstärkt werden. Solche UD-Tapes können beispielsweise aus Bündeln von Endlosfasern (z.B. Glasfaser, Kohlefaser, Metallfaser, Keramikfaser, Kunststofffaser, Naturfaser) bestehen, welche beispielsweise in speziellen Verfahren mit einem thermoplastischen Kunststoff imprägniert wurden. Dabei kann eine Endlosfaser beispielsweise jedwede Faser sein, die im Gegensatz zu einer sogenannten Kurzfaser oder einem Schnipsel, die beispielsweise einem Kunststoffgranulat zum Spritzgießen beigemengt werden, eine größere Länge als einen Millimeter (1 mm) aufweist. Als Matrixmaterial für die Imprägnierung der Faser oder Endlosfaser kann beispielsweise jedweder thermoplastische Kunststoff verwendet werden. Beispielsweise können zum Imprägnieren bzw. Vorimprägnieren der Fasern oder als Matrixmaterial (Matrixwerkstoff) zur Herstellung der UD-Tapes Kunststoffe verwendet werden, welche mit dem Kunststoff des Käfigs identisch oder chemisch verträglich sind.

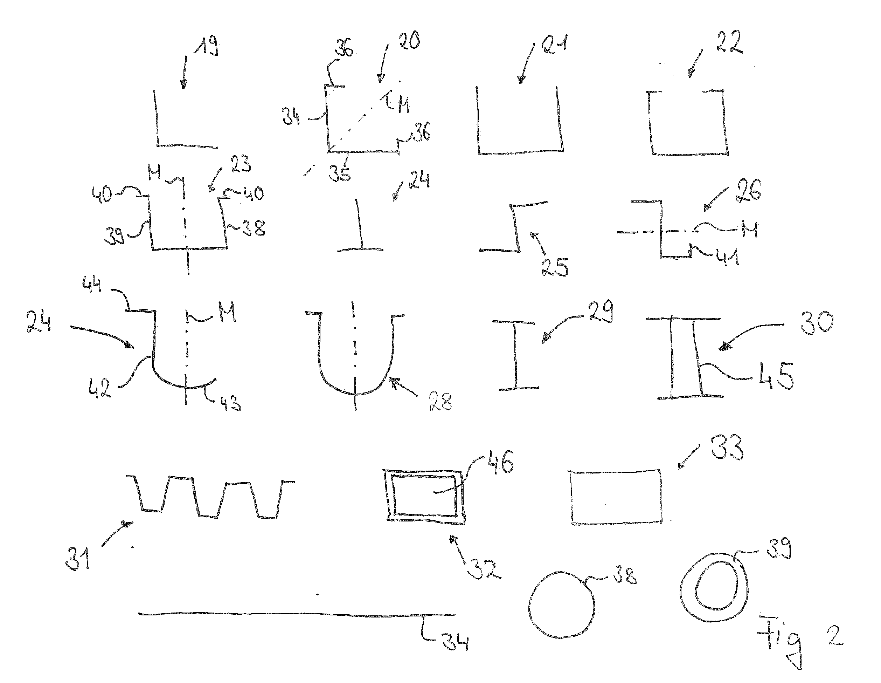

Fig. 2 zeigt eine schematische Darstellung von Vorderansichten unterschiedlicher Ausführungsbeispiele von Verstrebungen für einen Wälzlagerkäfig nach einem Ausführungsbeispiel.

Eine Verstrebung9 oder ein Faserbündel aus unidirektionalen Fasern bzw. ein Prepregband kann eine der mit den Bezugszeichen 19 bis 34, 38 und 39 bezeichneten Querschnitts- bzw. Profilformen aufweisen.

Die Verstrebung 19 weist einen L-förmigen Querschnitt auf.

Die Verstrebung 20 weist als Querschnittprofil die Form eines L-Profils auf, wobei jeweils von einem Schenkel 34 und einem Schenkel 35 ein weiterer Schenkel 36 abragt. Die Schenkel 36 zeigen zu einer Mittelachse M, berühren sich aber nicht.

Die Verstrebung 21 weist den Querschnitt eines U-Profils auf.

Die Verstrebung 22 weist einen rechteckigen Querschnitt auf, wobei ein Schenkel 37 eine Öffnung aufweist.

Die Verstrebung 23 weist die Form eines U-Profils auf, wobei von einem freien Ende des Schenkels 38 und 39 jeweils ein Schenkel 40 abragt, der von einer Mittelachse M der Verstrebung 23 weg zeigt.

Die Verstrebung 24 weist die Querschnittform eines T-Trägers auf.

Die Verstrebung 25 weist die Querschnittsform eines Z-Profils auf.

Die Verstrebung 26 weist die Form eines Z-Profils auf, wobei von einem der freien Schenkel ein weiterer Schenkel 41 rechtwinklig abragt, der zu einer Mittelachse M der Verstrebung 26 zeigt.

Das Profil der Verstrebung 27 weist einen Schenkel 42 auf, der einen Radius 43 ausbildet. An ein gerades Ende des Schenkels 42 schließt, im Wesentlichen senkrecht zu dem Schenkel 42, ein weiterer Schenkel 44 an.

Die Verstrebung 28 weist die Querschnittsform der Verstrebung 27 auf, die an der Mittelachse M gespiegelt wurde.

Die Verstrebung 29 weist eine Querschnittsform auf, die einem I-Profil entspricht.

Die Verstrebung 30 weist eine Querschnittsform auf, die einem I-Profil entspricht, wobei das I-Profil einen doppelten Steg 45 aufweist.

Die Verstrebung 31 weist eine wellenförmige Querschnittsform auf.

Die Verstrebung 32 weist ein rechteckiges Querschnittsprofil mit einem Hohlraum 46 auf.

Die Verstrebung 33 weist eine rechteckige Querschnittsform auf.

Die Verstrebung 34 weist eine Querschnittsform auf, die einer Geraden entspricht.

Die Verstrebung 38 weist einen kreisscheibenförmigen Querschnitt auf.

Die Verstrebung 39 weist einen kreisringscheibenförmigen Querschnitt auf.

Mit den Verstrebungen 30, 32, 39 oder weiteren nicht dargestellten Verstrebungen, die einen Hohlraum aufweisen, könnten beispielsweise ein Käfig oder ein Käfigsegment mit einem geringen Gewicht und trotzdem einer hohen Stabilität bereitgestellt werden.

Mit anderen Worten ausgedrückt, können die Verstrebungen oder UD-Tapes zur Verstärkung des Käfigs diverse Querschnittsprofile aufweisen (rechteckig, rund, profilartig).

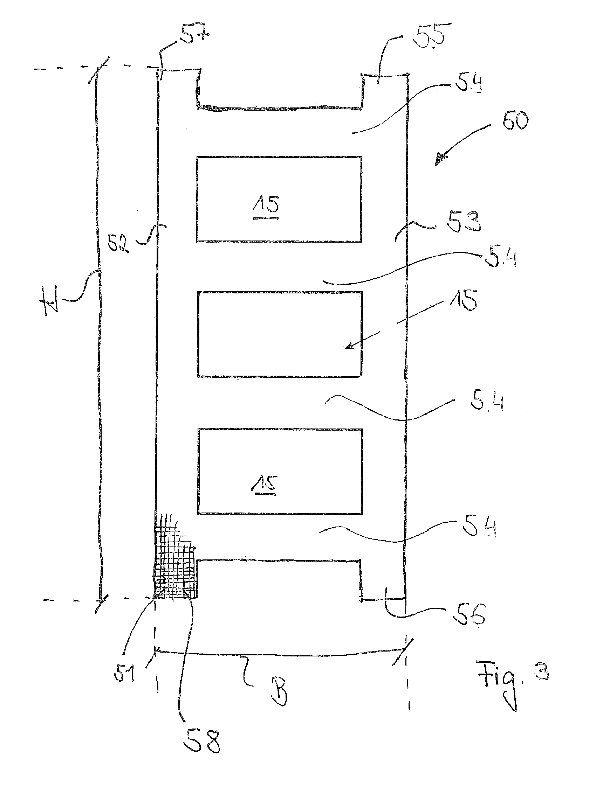

Fig. 3 zeigt eine schematische Darstellung einer Draufsicht einer Verstrebung, für einen Käfig gemäß einem Ausführungsbeispiel.

Die in Fig. 3 gezeigte Verstrebung 50 ist beispielsweise in einem ersten Arbeitsgang, auf eine Käfigbreite B und eine Käfigumfangslänge H zugeschnitten worden. Ferner weist die Verstrebung 50 Räume für die späteren Käfigtaschen 15 auf. Diese können ggf. ausgeschnitten oder ausgestanzt sein. Damit umfasst die Verstrebung 50 noch zwei streifenförmige Bereiche 52 und 53, die jeweils eine Länge H aufweisen und jeweils einen Führungsbord, also einen sich in eine Umfangsrichtung erstreckenden Ring des Käfigs ausbilden können. Die streifenförmigen Bereiche 52 und 53 sind jeweils durch Stege 54 miteinander verbunden. Zwischen zwei Stegen 53 und dem streifenförmigen Bereich 51 und 52 können, wenn die Verstrebung 50 zu einem Käfig geformt ist, die Taschen 15 ausbilden.

Ein Ende 55 des streifenförmigen Bereichs 53 und ein gegenüberliegendes Ende 56 des streifenförmigen Bereichs 53 können miteinander verbunden werden. Analog können ein freies Ende 57 des streifenförmigen Bereichs 52 und ein Ende 58 des streifenförmigen Bereichs 52 ebenfalls miteinander verbunden werden. Dadurch kann aus der Verstrebung 50 ggf. ein ringförmiger Käfig gebildet werden oder eine Trage- bzw. Verstärkungsstruktur oder ein Gerüst für einen Käfig der ggf. noch mit einem anderen Material ummantelt werden kann. Ggf. können die Enden 55 und 56 und die Enden 57 und 58, jeweils überlappend miteinander verbunden (z.B. verschweißt) sein.

Bei der Verstrebung 50 aus einem textilen technischen Gewebe kann es sich beispielsweise um ein Organoblech, handeln. Die Verstrebung 50 kann ggf. als Werkstoff für einen Käfig (z.B. Kunststoffkäfig) oder ein Käfigsegment verwendet werden. Die Verstrebung 50 kann beispielsweise einen Faserverbundwerkstoff oder ein Faserwerkstoff aus einem textilen technischen Gewebe (z. B. Glasfaser, Kohlefaser, Metallfaser, Keramikfaser, Kunststofffaser, Naturfaser) umfassen. Dieser oder diese können beispielsweise mit einem thermoplastischen Kunststoff imprägniert sein. Dazu kann beispielsweise ein spezielles Verfahren eingesetzt werden. Die Fasern der in dem Bereich 51 schematisiert dargestellten Gewebestruktur können von einer Matrix umgeben bzw. in eine Matrix eingebettet sein. Als Matrixmaterial für die Imprägnierung des Gewebes kann jedwedes Material, beispielsweise ein thermoplastischer oder duroplastischer oder elastomerer Kunststoff verwendet werden.

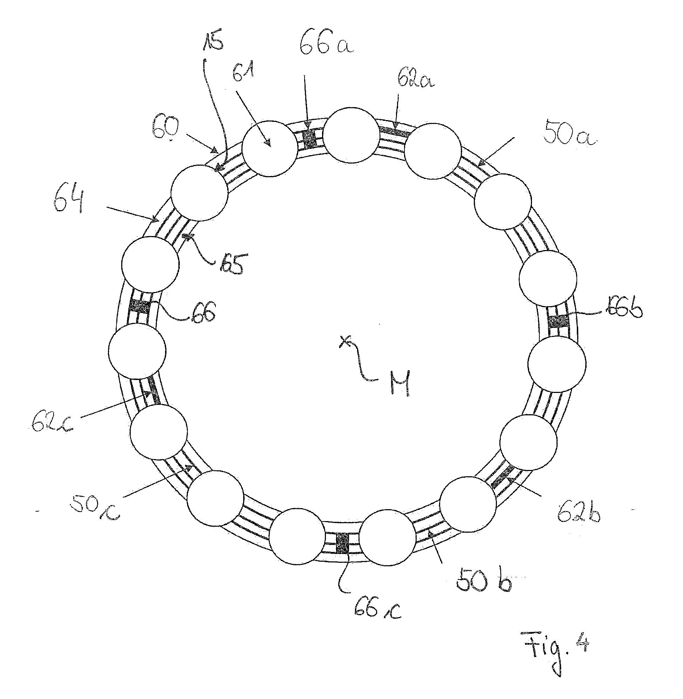

Fig. 4 zeigt eine schematische Darstellung einer Seitenansicht eines Käfigs, der eine Mehrzahl von Verstrebungen gemäß Fig. 3 umfasst, nach einem Ausführungsbeispiel.

In einem in Fig. 4 gezeigten Käfig 60 bzw. dessen Taschen 15 sind eine Mehrzahl von Wälzkörpern 61 aufgenommen. Der Käfig 60 umfasst eine Mehrzahl von Verstrebungenen 50a, 50b und 50c, die an ihren Enden in den Überlappungsbereichen 62a, 62b, 62c jeweils zu einem ringförmigen Gerüst verbunden sind. Die Verstrebungen 50a, 50b und 50c sind konzentrisch zueinander um eine Mittelachse M angeordnet. Dabei weist die Verstrebung 50a einen größten Radius, die Verstrebung 50b einen mittleren Radius und die Verstrebung 50c einen kleinsten Radius auf. Mit anderen Worten ausgedrückt, kann eine radial innen angeordnete Verstrebung einen kleineren Radius oder Länge aufweisen, als eine radial außen angeordnete Verstrebung.

Bei dem Ausführungsbeispiel der Fig. 4 sind die Verstrebungen 50a, 50b und 50c so zueinander angeordnet, dass die Überlappungsbereiche 62a, 62b und 62c in dem sich jeweils zwei Enden einer Verstrebung 50 überlappen gleichmäßig auf einem Kreisring verteilt sind. Dadurch, dass die Überlappungsbereiche 62a, 62b und 62c zueinander versetzt angeordnet sind, könnte beispielsweise ermöglicht werden, dass der Werkstoff und Massen in dem Käfig möglichst gleichmäßig verteilt sind. Beispielsweise können die Überlappungsbereiche jeweils um 120° zueinander versetzt angeordnet sein.

Ergänzend kann der Käfig 60 mit einem Kunststoff beschichtet bzw. überzogen sein. Dazu kann der Käfig 60 ggf. die schematisiert dargestellte Kunststoffschicht 64 aufweisen. Die Kunststoffschicht 64 ist in einem radial außenliegenden Bereich angeordnet. Ergänzend kann der Käfig 60 auch in einem radial innenliegenden Bereich eine weitere Kunststoffschicht 65 aufweisen.

In weiteren, nicht dargestellten Ausführungsbeispielen kann der Käfig 60 ohne die Kunststoffschicht 64 oder ohne die Kunststoffschicht 65 ausgebildet sein.

Ferner kann der Käfig 60 einen Abstandshalter 66 aufweisen. Der Abstandshalter 66 kann zwischen den Verstrebungenen 50a, 50b und 50c angeordnet sein, so dass diese in einem vorbestimmten Abstand zueinander beabstandet sind bzw. gehalten werden können. Beispielsweise kann der Käfig 60 eine Mehrzahl von Abstandshaltern 66a, 66b, 66c und 66 aufweisen.

Bei einem weiteren, nicht dargestellten Ausführungsbeispiel kann der Käfig 60 ohne die Abstandshalter 66 ausgebildet sein.

Mit anderen Worten ausgedrückt, kann der Kunststoffkäfig 60 oder ein entsprechendes Käfigsegment durch ein Organoblech verstärkt sein. Solche Organobleche können beispielsweise aus textilen technischen Geweben (z. B. Glasfaser, Kohlefaser, Metallfaser, Keramikfasern, Kunststofffasern, Naturfasern) bestehen. Diese können mit einem thermoplastischen Kunststoff imprägniert sein. Dazu kann ein spezielles Verfahren angewendet werden. Beispielsweise können sich die Organobleche durch Erwärmen (z.B. mittels Infrarotstrahler) in eine gewünschte Form, z. B. den Wälzlagerkäfig verformen lassen. Beispielsweise können als Werkstoff zur Herstellung der Organobleche bzw. zum Imprägnieren der Fasern, solche Kunststoffe ausgewählt werden, welche mit dem Kunststoff oder den Kunststoffschichten 64 bzw. 65 identisch oder chemisch verträglich sind. Beispielsweise können einzelne Lagen des Organoblech z.B. als Verstrebung ) zunächst in einem Arbeitsgang auf eine Käfigbreite B und Käfiglänge H gemäß einem Käfigumfang zugeschnitten werden. Es können auch Räume für die späteren Käfigtaschen 15 ausgestanzt werden. Anschließend kann das zugeschnittene Organoblech erwärmt und umgebogen bzw. in Form gebogen werden. Die Enden 55, 56 einer Seite und 57, 58 der anderen Seite des Organoblechs können beispielsweise überlappend miteinander verschweißt werden. Dadurch kann ggf. eine Verstrebung oder eine Verstärkungsstruktur aus einem Organoblech in Form eines Wälzlagerkäfigs bereitgestellt werden. Diese Verstrebung kann, beispielsweise gerichtet, in ein Spritzgießwerkzeug eingelegt und mit einem Kunststoff umspritzt werden. Beispielsweise können auch mehrere Lagen diese Verstrebung aus dem Organoblech mit unterschiedlichen Durchmessern erzeugt und nacheinander gerichtet, beispielsweise mit Abstandshaltern voneinander beabstandet, in das Spritzgießwerkzeug eingelegt werden. Dadurch könnte beispielsweise die Festigkeit des Käfigs 60 weiter erhöht werden.

Bei weiteren, nicht dargestellten Ausführungsbeispielen können der Käfig oder das Käfigsegment auch vollständig aus dem Organoblech oder einem faserverstärktem Werkstoff oder der Verstrebung bestehen. Beispielsweise können einzelne Lagen des faserverstärkten Werkstoffs (Organoblech) zunächst in ein Presswerkzeug eingelegt werden. Beispielsweise durch Erwärmen unter Druck und anschließendem Abkühlen können diese die endgültige Käfigform erhalten.

Eine weitere Möglichkeit zur Herstellung des Käfigs kann darin bestehen, dass zunächst Rohre aus der Verstrebung bzw. dem faserverstärkten Werkstoff oder dem textilen technischen Gewebe gewickelt werden. Die einzelnen Lagen der Verstrebung können dann beispielsweise unter einer Temperatureinwirkung miteinander verbunden oder verschweißt werden. Die Taschen- oder Käfiggeometrie kann beispielsweise nach dem Ablängen der Rohre auf eine Käfigbreite mittels eines Wafer oder Bohren eingebracht werden. Dadurch könnten beispielsweise nahtfreie Wälzlagerkäfige bereitgestellt werden.

Bei einigen weiteren, nicht dargestellten Ausführungsbeispielen können beispielsweise durch Erwärmen, (z. B. mittels Heißluftfön) Verstrebungen oder Faserbündel (UD-Tapes, Prepregbänder) die mit einem Kunststoff imprägniert sind, zunächst als Vorformlinge in eine Käfiggeometrie gebogen werden. Dabei kann es sich beispielsweise um unidirektional angeordnete Fasern oder Endlosfasern handeln. Dabei kann ggf. die unidirektionale Anordnung der Endlosfaser erhalten bleiben. Dies könnte dazu führen, dass die Kräfte in dem Käfig sehr gut auf-genommen werden können. Beispielsweise können die Vorformlinge mit einem Kunststoff umspritzt werden. Mit anderen Worten ausgedrückt, könnte ein Käfig oder ein Käfigsegment mit einem unidirektionalen Faserbündel (UD-Tape) über den kompletten Käfig verstärkt sein und anschließend mit thermoplastischem oder duroplastischem oder elastomerem Kunststoff umspritzt werden.

Bei weiteren, nicht dargestellten Ausführungsbeispielen können mit den Verstrebungen bzw. Faserbündeln aber auch gezielt nur Bereiche mit Schwachstellen (Bindenähte, Umlenkungen) verstärkt und anschließend mit thermoplastischem oder duroplastischem oder elastomerem Kunststoff umspritzt werden.

Bei weiteren, nicht dargestellten Ausführungsbeispielen können ein Käfig oder ein Käfigsegment vollständig oder komplett aus einer Verstrebung oder einem unidirektionalen Faserbündel (UD-Tape) bestehen. Dabei können die Faserbündel beispielsweise zunächst in ein Presswerkzeug eingelegt und anschließend ggf. durch Erwärmen, beispielsweise unter Druck und anschließendem Abkühlen ihre endgültige Käfigform erhalten. Beispielsweise können die Faserbündel vor dem Einlegen in das Presswerkzeug auf eine entsprechende Länge abgelängt werden.

Bei weiteren, nicht dargestellten Ausführungsbeispiel können beispielsweise Rohre aus der Verstrebung, dem faserverstärkten Werkstoff oder den Faserbündeln (unidirektionale Faserbündel, UD-Tapes) gewickelt werden. Nach dem Ablängen der Rohre, beispielsweise auf eine Käfigbreite, kann mittels Fräsen oder Bohren die Taschengeometrie und/oder die Käfiggeometrie aus den Rohren ausgeschnitten werden. Da die mechanischen Kennwerte der unidirektionalen Faserbündel, die mechanischen Kennwerte, beispielsweise von Messing, bei wesentlich geringerer Dichte deutlich übertreffen können, könnten beispielsweise Messingkäfige durch einen Käfig nach einem der Ausführungsbeispiele ersetzt werden.

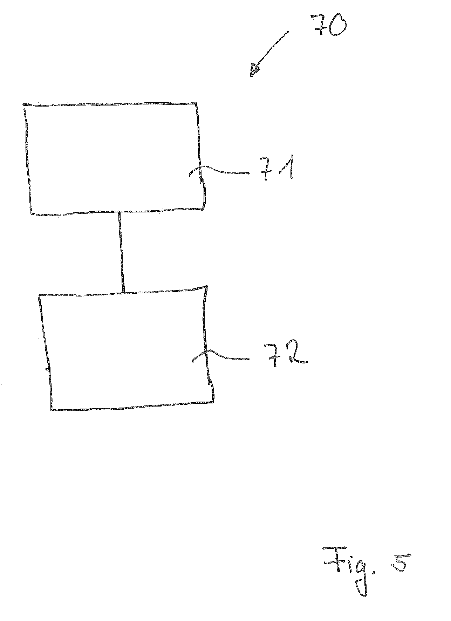

Fig. 5 zeigt eine schematische Darstellung eines Verfahrens zur Herstellung eines Käfigs oder eines Käfigsegments für ein Wälzlager nach einem Ausführungsbeispiel.

Ein Verfahren 70, wie in Fig. 5 gezeigt, zum Herstellen eines Käfigs 1 oder eines Käfigsegments 3 für ein Wälzlager umfasst ein Bereitstellen 71 zumindest einer Verstrebung mit einer vorimprägnierten Faser. Ferner umfasst das Verfahren 70 ein zumindest abschnittsweises Formen 72 des Käfigs 1 oder des Käfigsegments 3 aus der zumindest einen Faser.

Dabei kann das Bereitstellen 71 der zumindest einen Verstrebung beispielsweise ein Zuschneiden der vorimprägnierten Faser vor dem Einlegen in ein Presswerkzeug oder vor dem Einlegen in ein Spritzgusswerkzeug oder das Zuschneiden einer Gewebefasermatte oder das Zuschneiden einer Gewebefasermatte oder eines unidirektionalen Faserbündels vor dem Aufwickeln zu einem Rohr sein. Das zumindest abschnittsweise Formen 72 des Käfigs kann dabei das Anordnen der Verstrebung in einem Schwachstellenbereiche in ein Spritzgusswerkzeug sein, das Formen in einem Formwerkzeug oder das Ausstanzen oder Ausschneiden der Käfiggeometrie aus einem gewickelten Rohr sein.

Käfige oder Käfigsemente und Verfahren gemäß den beschriebenen Ausführungsbeispielen können beispielsweise in alle Arten von Wälzlagern, beispielsweise ein Zylinderrollenlager oder Kegelrollenlager (z.B. CRB, TRB, LSB) oder einem Wälzlager für ein Schienenfahrzeug eingesetzt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Käfig
- 3: Käfigsegment
- 5: Steg
- 7: Werkstoff
- 9: Verstrebung
- 11: Käfigbord
- 13: Käfigbord
- 15: Tasche
- 17: Schwachstelle
- 19: Verstrebung
- 20: Verstrebung
- 21: Verstrebung
- 22: Verstrebung
- 23: Verstrebung
- 24: Verstrebung
- 25: Verstrebung
- 26: Verstrebung
- 27: Verstrebung
- 28: Verstrebung
- 29: Verstrebung
- 30: Verstrebung
- 31: Verstrebung
- 32: Verstrebung
- 33: Verstrebung
- 34: Verstrebung
- 35: Schenkel
- 36: Schenkel
- 37: Schenkel
- 38: Verstrebung
- 39: Verstrebung
- 42: Schenkel
- 43: Radius
- 44: Schenkel
- 45: doppelter Steg
- 46: Hohlraum
- 50: Verstrebung
- 51: Gewebestruktur
- 52: streifenförmiger Bereich
- 54: streifenförmiger Bereich
- 55: Ende
- 54: Steg
- 55: Ende
- 56: Ende
- 57: Ende
- 58: Ende
- 60: Käfig
- 62: Überlappungsbereich (Überlappungsende Organoblech)
- 64: Kunststoffschicht
- 65: Kunststoffschicht
- 66: Abstandshalter
- 70: Verfahren
- 71: Ablängen
- 72: Formen
- b: Stegbreite
- L: Länge Faser
- B: Käfigbreite
- T: Taschenbreite
- t: Taschenhöhe
- d: Breite Führungsbord
- H: Käfigumfangslänge
- M: Mittelachse

## Patentansprüche

1. Käfig (1) oder Käfigsegment (3) für ein Wälzlager, wobei der Käfig (3) oder das Käfigsegment (3) zumindest eine Verstrebung (9,50) mit zumindest einer vorimprägnierten Faser umfasst.

2. Käfig oder Käfigsegment nach Anspruch 1, wobei die Verstrebung (9, 50) eine Mehrzahl von unidirektional angeordneten Fasern umfasst und/oder wobei die Verstrebung (9, 50) eine textile Gewebefaserschicht umfasst.

3. Käfig oder Käfigsegment nach einem der vorhergehenden Ansprüche, wobei die zumindest eine Verstrebung (9, 50) zumindest abschnittweise parallel zu einer Breite des Käfigs (1) in eine axiale Richtung angeordnet ist und/oder wobei die zumindest eine Verstrebung (9, 50) zumindest abschnittweise parallel zu einer Umfangsrichtung des Käfigs (1) angeordnet ist und/oder wobei die zumindest eine Verstrebung (9, 50) in einem Bereich des Stegs (5) zumindest abschnittsweise parallel zu dem Steg (5) und/oder in einem Bereich eines Käfigbords (11, 13) zumindest abschnittsweise in eine Umfangsrichtung angeordnet ist.

4. Käfig oder Käfigsegment, nach einem der vorhergehenden Ansprüche, wobei die Verstrebung (9, 10) aus einer Gewebefaserschicht ausgeschnitten ist.

5. Käfig oder Käfigsegment nach einem der vorhergehenden Ansprüche, wobei die zumindest eine Verstrebung (9, 50) zumindest abschnittsweise mit einem Kunststoff umspritzt ist.

6. Käfig oder Käfigsegment nach einem der vorhergehenden Ansprüche, umfassend eine Mehrzahl von Verstrebungen (9, 50), die in radialer Richtung übereinander angeordnet sind.

7. Käfig oder Käfigsegment nach Anspruch 6, wobei zwischen zwei Verstrebungen (9, 50) mindestens ein Abstandshalter (66) angeordnet ist.

8. Verfahren (70) zum Herstellen eines Käfigs (1) oder eines Käfigsegments (3) für ein Wälzlager, umfassend:
Bereitstellen (71) zumindest einer Verstrebung (9, 50) mit einer vorimprägnierten Faser;
zumindest abschnittsweises Formen (72) des Käfigs (1) oder des Käfigsegments (3) aus der zumindest einen Verstrebung (9).

9. Verfahren nach Anspruch 8, umfassend zumindest abschnittsweises Umspritzen der zumindest einen Verstrebung (9) mit einem Kunststoff.

10. Verfahren nach einem der Ansprüche 8 oder 9, umfassend:
Wickeln der zumindest einen vorimprägnierten Verstrebung (9) zu einem Rohr;
Ausstanzen des Käfigs (1) oder des Käfigsegments (3) aus dem Rohr.
